# EUROPÄISCHE PATENTSCHRIFT

(11) **EP 0 982 695 B1**
(45) Veröffentlichungstag und Bekanntmachung des Hinweises auf die Patenterteilung: **18.08.2004**
(21) Anmeldenummer: 99103223.6
(22) Anmeldetag: 18.02.1999
(51) Int. Cl.: G07F 17/30, G07F 17/16

(54) **Multimediabox-Netzwerk**
Network for multimedia devices
Réseau pour des appareils multimedia

(30) Priorität: 21.08.1998 DE 19838143; 15.10.1998 DE 19847686
(43) Veröffentlichungstag der Anmeldung: 01.03.2000
(73) Patentinhaber: NSM Music Group Limited, Leeds LS11 0FW (GB)
(72) Erfinder: Ballhorn, Karsten, 55595 Dalberg (DE)
(74) Vertreter: Pilkington, Stephanie Joan

(56) Entgegenhaltungen:
- WO-A-97/28510
- DE-A- 19 548 445
- DE-A- 19 614 820
- US-A- 3 947 882
- US-A- 5 341 350
- US-A- 5 418 713
- US-A- 5 642 337

## Beschreibung

Die Erfindung betrifft ein Multimediabox-Netzwerk, bestehend aus einem Datenserver, der einen Massenspeicher umfaßt, auf dem digitale Musikstücke und/oder Videos gespeichert sind, und aus mehreren Multimediaboxen, wobei eine Multimediabox jeweils eine Bedieneinheit, einen lokalen Speicher und eine Abspieleinheit umfaßt und wobei jede Multimediabox über eine erste Datenverbindung mit dem Datenserver verbunden ist.

Ein derartiges Netzwerk ist beispielsweise aus der WO 92/01342 bekannt. Gemäß der WO 92/01342 sind mehrere Musikautomaten jeweils über eine Datenfernübertragungsleitung mit einem zentralen Musikspeicher verbunden, wobei die Datenfernübertragungsleitung vorzugsweise eine ISDN-Leitung ist. Der Musikautomat weist in bekannter Weise eine Münzeinheit, eine Anzeige, eine Eingabetastatur und mindestens einen Lautsprecher auf und besitzt darüber hinaus einen Digital/Analogumsetzer und Verstärker für über die Datenfernübertragungsleitung aufgenommenen Toninformationen.

Aus der DE 42 44 198 A1 ist ein Netzwerk für mehrere Musikboxen bekannt, das dezentral aufgebaut ist. Hierbei ist kein zentraler Speicher für die abspielbaren Musikstücke vorgesehen, sondern die zu speichernden Musikstücke sind auf eine bestimmte Anzahl von Musikabspieleinheiten verteilt. Die Musikabspieieinheiten sind miteinander vernetzt, so daß von jeder Musikabspieleinheit zu einer anderen ein Musikstück angefordert werden kann. Ein zentraler Rechner führt zusätzlich zentrale Verwaltungsaufgaben durch, wobei auf dem zentralen Rechner insbesondere Nutzungsdaten der einzelnen Musikabspieleinheiten abgespeichert sind.

Aus der US 5 355 302 ist ein Netzwerk bestehend aus mehreren Musikboxen bekannt, bei dem die einzelnen Musikboxen sternförmig mit einer zentralen Management-Station verbunden sind. Die Management-Station umfaßt einen Hostcomputer und einen Massenspeicher, so daß seitens der Management-Station Musikdaten auf die einzelnen Musikboxen übertragen werden können. Zusätzlich übernimmt die Management-Station auch Verwaltungsaufgaben. Zur Wartung der einzelnen Musikboxen ist jeweils eine tragbare Konsole vorgesehen, die vor Ort an die jeweilige Musikbox angeschlossen werden kann.

Ein Nachteil der oben beschriebenen Netzwerke für Musikboxen besteht darin, daß entweder nur eine zentrale Wartung über einen zentralen Rechner oder aber eine Wartung direkt vor Ort für eine einzelne Musikbox möglich ist.

Aus US-A- 5 418 713 ist ein Datenübertragungs netzwerk für Musik- und Videodaten bekannt, das einen zentralen Hostserver und wenigstens eine als "remote location" bezeichnete Gruppe von Multimedia-Abspieleinheiten umfaßt, die von einem an der "remote location " angeordneten "remote server" verwaltet werden. Der gesamte Datenaustausch zwischen jeder der Abspieleinheiten und dem zentralen Hostserver erfolgt über den "remote server" der somit auch mit der Übertragung der Daten für die Musikstücke und/oder Videos belastet ist.

Aufgabe der Erfindung ist es daher, ein leistungsfähiges Netzwerk für Multimediaboxen zu schaffen, das eine dezentrale Wartung mehrerer Multimediaboxen ermöglicht.

Diese Aufgabe wird durch die Merkmale des Patentanspruchs 1 gelöst. Es ist also eine Management-Station jeweils für eine bestimmte Gruppe von mehreren Multimediaboxen vorgesehen, die eine dezentrale Wartung dieser Multimedia-Boxen ermöglicht. Die Management-Station übernimmt dabei nicht die Aufgabe zur Übertragung großer Datenmengen, sondern regelt lediglich den Informationsaustausch zwischen dem Datenserver und den einzelnen Multimediaboxen unter Berücksichtigung des jeweils vorgesehenen Angebots an Musikstücken und/oder Videos für eine Multimediabox.

Mit dem erfindungsgemäßen Multimediabox-Netzwerk ist es somit möglich, mehrere Multimedia-Boxen dezentral von einem Betreiber bzw. einer Betreibergesellschaft zu warten und zu unterhalten. Die Betreibergesellschaft kann ihrerseits wiederum das Leistungsangebot für eine Multimediabox bzw. die Dienstleistung zur Wartung der Multimediabox an die jeweiligen Endbenutzer weitergeben. Hierdurch wird ein dezentrales System zum Betreiben mehrerer Multimedia-Boxen geschaffen, die wiederum in kostengünstiger Weise mit einem Datenserver verbunden sind.

Nach einer bevorzugten Ausführungsform besteht die erste Datenverbindung zwischen dem Datenserver und einer Multimediabox aus einer ISDN-Leitung.

Nach einer bevorzugten Ausführungsform ist vorgesehen, daß auf der Management-Station eine Servicedatenbank der auf dem Datenserver verfügbaren Musikstücke und/oder Videos abgespeichert ist, die über die zweite Datenverbindung aktualisierbar ist. Auch bei einer großen Datenmenge an abgespeicherten Musikstücken und/oder Videos auf dem Datenserver stellt die Zusammenstellung der jeweils verfügbaren Titel nur eine verhältnismäßig geringe Datenmenge dar, so daß diese problemlos auf den jeweiligen Management-Stationen zusätzlich in einer Datenbank abgespeichert sein können. Sobald mit einer Management-Station bestimmte Dienste ausgeführt werden sollen, wird zunächst eine Verbindung mit dem zentralen Datenserver hergestellt, um die Servicedatenbank aus der jeweiligen Management-Station zu aktualisieren. Hierzu wird seitens des Datenservers ein Hinzufüge-Befehl für neu hinzuzufügende Titel und ein Lösch-Befehl für zu löschende Titel an die Management-Station abgegeben.

Um die Verwaltung der jeweils verfügbaren Musikstücke und/oder Videos auf dem Datenserver zu vereinfachen, kann vorgesehen sein, daß der Datenserver aus einem Hauptserver und einem Informations-Server besteht. Während auf dem Hauptserver die eigentlichen Daten der Musikstücke und/oder Videos gespeichert sind, verwaltet der Informations-Server lediglich die auf dem Hauptserver gespeicherten Titel, wodurch der Hauptserver entlastet wird. Zweckmäßigerweise sind dabei auf dem Informations-Server sämtliche Informationen über das Datenangebot des Hauptservers in einer Informations-Datenbank abgespeichert, wobei der Datenaustausch zwischen dem Hauptserver und dem Informations-Server über eine parallele Datenverbindung erfolgt. Selbstverständlich ist es aber auch möglich, daß der Informations-Server von dem Hauptserver örtlich getrennt ist und mit dem Hauptserver über eine geeignete serielle Datenverbindung kommuniziert.

Nach einer weiteren bevorzugten Ausführungsform ist vorgesehen, daß auf der Management-Station eine Benutzerdatenbank der Benutzerdaten abgespeichert ist, aufgrund dessen über die dritte Datenverbindung eine Wartung und/oder eine Programmierung der jeweils verbundenen Multimediabox möglich ist. Auf diese Weise stehen auf der Management-Station die Informationen über die jeweils angeschlossene Multimediabox direkt zur Verfügung, ohne daß hierzu eine zusätzliche Datenübertragung erforderlich ist. Insbesondere kann auf der Benutzer-Datenbank der Status der an die jeweilige Management-Station angeschlossenen Multimediaboxen abgespeichert sein. Mit der Management-Station können somit auf der jeweiligen Multimediabox bestimmte Graphiken und Darstellungsformen der gespeicherten Titel ebenso verändert werden wie beispielsweise Abrechnungsmodalitäten gegenüber dem Betreiber der jeweiligen Management-Station.

Nach einer weiteren bevorzugten Ausführungsform ist vorgesehen, daß ein Befehl zum Überspielen von Musikstücken und/oder Videos auf eine bestimmte Multimediabox seitens der damit verbundenen Management-Station an den Datenserver über die zweite Datenverbindung und/oder über eine Zusatzverbindung absetzbar ist, wobei das Überspielen von Musikstücken und/oder Videos auf die bestimmte Multimediabox über die erste Datenverbindung erfolgt. Auf der Management-Station werden somit auf der Basis der Informations-Datenbank die neu zu überspielenden Titel für eine Multimediabox zusammengestellt und daraus ein entsprechender Befehl für den Datenserver erzeugt. Dieser Befehl wird sodann an den Datenserver abgesetzt. Soweit seitens des Datenservers eine Trennung zwischen einem Informationsserver und einem Hauptserver vorliegt, erfolgt die Absetzung des Befehls vorzugsweise direkt über eine Zusatzdatenverbindung an den Hauptserver. Die Zusatzdatenverbindung besteht dabei vorzugsweise in Richtung des Datenservers aus einer ISDN-Leitung und in der Gegenrichtung zur Management-Station aus einer Internet-Verbindung. Über die ISDN-Leitung kann der Befehl schnell und direkt zum Datenserver bzw. Hauptserver abgesetzt werden, während es in der Regel nicht erforderlich ist, auf die Bestätigung seitens des Datenservers bzw. des Hauptservers zu warten, daß der Befehl tatsächlich ausgeführt worden ist. Deshalb ist es sinnvoll, die Befehlsbestätigung seitens des Datenservers bzw. Hauptservers über das Internet abzusetzen, wo die entsprechende Nachricht als e-Mail abgelegt und bei passender Gelegenheit von der Management-Station abgerufen werden kann.

Hinsichtlich der Ausführung der dritten Datenverbindung zwischen der Management-Station und einer Multimediabox bestehen zwei Möglichkeiten: zum einen kann eine direkte Datenverbindung bestehend aus einer ISDN-Leitung zwischen der Management-Station und der jeweiligen Multimediabox aufgebaut werden. Zum anderen ist es aber auch denkbar, daß die bereits bestehenden Datenverbindungen gemäß der ersten Datenverbindung und der zweiten Datenverbindung ausgenutzt werden, indem diese in geeigneter Weise hintereinander geschaltet werden. Beispielsweise ist es denkbar, die oben beschriebene Zusatzdatenverbindung zu dem Hauptserver zu nutzen, um diese mit der ISDN-Leitung zwischen dem Hauptserver und einer Multimediabox zu verschalten. Hierzu empfängt der Hauptserver einen entsprechenden Verbindungsaufruf seitens der Management-Station und schaltet diesen auf die entsprechende ISDN-Leitung durch. In entsprechender Weise ist es selbstverständlich auch möglich, die oben beschriebene ISDN-Leitung zwischen der Management-Station und dem Informationsserver zu nutzen. Eine Weiterschaltung auf die aus einer ISDN-Leitung bestehenden ersten Datenverbindung zwischen dem Hauptserver und einer Multimediabox erfolgt sodann über die parallele Datenverbindung zwischen dem Informationsserver und dem Hauptserver.

Das Bespielen des Datenservers mit entsprechenden Musikdaten erfolgt vorzugsweise seitens einer CD-Abspieleinheit. Hierbei ist allerdings zu beachten, daß das Datenformat der auf einer CD abgespeicherten Musikdaten zur Übertragung in großen Datenmengen nicht geeignet ist. Es ist deshalb zweckmäßig, die auf einer CD gespeicherten Musikdaten in ein zur Übertragung geeignetes Format umzusetzen, wobei sich für Musikstücke bzw. Musikdaten beispielsweise das MPEG-Format und für Bilder das JPEG-Format eignet. Im Rahmen der Übertragung von Bildern können insbesondere auch Cover-Bilder übertragen werden, wobei seitens der Multimediabox beim Abspielen eines Musikstücks ein dazu zugeordnetes Cover-Bild angezeigt wird.

Nach einer bevorzugten Ausführungsform ist vorgesehen, daß die Bedieneinheit einer Multimediabox aus einem Touch-Screen-Monitor besteht, auf dem die in dem lokalen Speicher abgespeicherten digitalen Musikstücke und/oder Videos anzeigbar und über Fingerdruck auswählbar sind und einer Abspieleinheit zuführbar sind. Die Abspieleinheit besteht dabei in üblicher Weise aus einer Verstärker-Lautsprecher-Einheit zum Abspielen der Musikstücke und gegebenenfalls einem Video-Monitor zum Anzeigen von Cover-Bildern oder zum Darstellen von Video-Bildern.

Weitere Einzelheiten und Vorteile der Erfindung werden anhand eines in der Zeichnung dargestellten Ausführungsbeispiels näher erläutert.

In dieser zeigt:
- Fig. 1: Das erfindungsgemäße Mutlimediabox-Netzwerk im Betrieb nach einer ersten Ausführungsform,
- Fig. 2: das erfindungsgemäße Multimediabox-Netzwerk im Betrieb nach einer zweiten Ausführungsform und
- Fig. 3: die Initialisierung einzelner Multimediaboxen vor deren Inbetriebnahme.

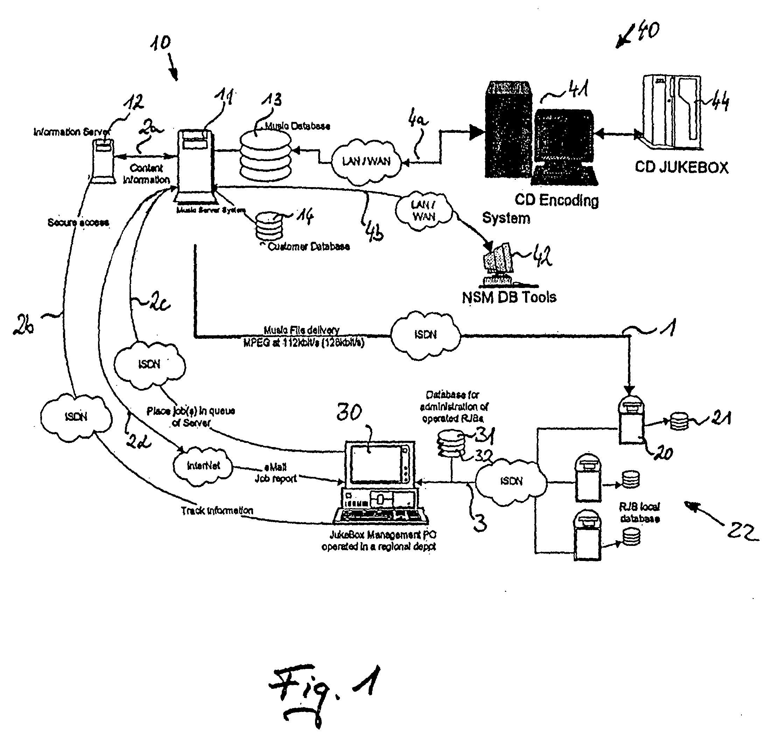

Fig. 1 zeigt das erfindungsgemäße Multimediabox-Netzwerk im Betrieb nach einer ersten Ausführungsform.

Die wesentlichen Komponenten des Multimediabox-Netzwerkes sind der Datenserver 10, die sternförmig daran angeschlossenen Multimediaboxen 20, die Management-Station 30 sowie eine CD-Abspieleinheit 40. Im folgenden wird das Netzwerk nur für die Übertragung von Musikdaten beschrieben, entsprechendes gilt aber auch für die Übertragung von sonstigen Daten im Multimedia-Bereich, wie z.B. Bilddaten oder Videodaten. Der Datenserver 10 ist wiederum unterteilt in einen Hauptserver 11 und einen Informationsserver 12, die über eine Datenverbindung 2a miteinander kommunizieren. Auf dem Hauptserver 11 sind sämtliche Musikdaten und/oder Bilddaten in einer Datenbank 13 gespeichert, während Daten betreffend Abrechnung und Lizenzierung in einer Benutzerdatenbank 14 gespeichert sind. Auf dem Informationsserver 12 sind dagegen sämtliche Zugriffsinformationen der auf dem Hauptserver verfügbaren Musikstücke gespeichert. Zum Bespielen der Datenbank 13 mit digitalen Musikdaten ist ein CD Encoding System 41 mit einem CD-Wechsler 44 vorgesehen. Das CD Encoding System wandelt das CD-Datenformat in ein geeignetes Übertragungsformat, beispielsweise ein MPEG-Format, um, so daß die gewandelten Daten über eine LAN/WAN-Datenleitung 4a auf die Musikdatenbank 13 übertragen werden können. Zur Verwaltung der Benutzerdatenbank 11 ist in der CD-Abspieleinheit eine zusätzliche Bedieneinheit 42 vorgesehen, die über die LAN/WAN-Datenleitung 4b mit dem Hauptserver 11 verbunden ist.

In der Regel ist nur ein Datenserver 10 bestehend aus einem Hauptserver und einem Informationsserver 12 erforderlich, wobei auf der Musikdatenbank 13 beispielsweise bis zu 10.000 Musikstücke im MPEG-Format gespeichert sein können. An den Hauptserver 10 sind sodann sternförmig die einzelnen Musikboxen über eine ISDN-Leitung angeschlossen, wobei aus Vereinfachungsgründen in der Fig. 1 nur eine ISDN-Leitung 1 zu einer Musikbox 20 dargestellt ist. Eine bestimmte Anzahl der Musikboxen wird jeweils von einer Betreibergesellschaft betrieben und gewartet, so daß diese Musikboxen eine Betreibergruppe 22 darstellen. Jeder Betreibergruppe 22 ist eine Management-Station 30 zugeordnet, die jeweils über eine ISDN-Leitung 3 sternförmig mit den einzelnen Musikboxen 20 einer Betreibergruppe 22 verbunden sind. Die Management-Station 30 umfaßt eine Benutzerdatenbank 31, auf der der Status der angeschlossenen Musikboxen 20 verwaltet wird. Seitens der Management-Station 30 können auf der Musikbox 20 Darstellungsarten ebenso wie bestimmte Abrechnungsmodalitäten verändert werden.

Neben der Benutzerdatenbank 31 umfaßt die Management-Station auch eine Servicedatenbank 32, auf der die auf dem Datenserver verfügbaren Musikstücke verwaltet werden. Zur Aktualisierung der Servicedatenbank 32 ist die Management-Station 30 mit einer ISDN-Leitung 2b mit dem Informationsserver 12 verbunden. Außerdem besteht in Richtung des Hauptservers 11 eine ISDN-Verbindung 2c sowie in der Gegenrichtung vom Hauptserver 11 zu der Management-Station 30 eine Internet-Verbindung 2d.

Im Betrieb des Netzwerkes gemäß Fig. 1 ist im wesentlichen zu unterscheiden zwischen dem Aufspielen von neuen Musikdaten auf den Hauptserver 11, dem Aufspielen von neuen Musikdaten auf die Musikboxen 20 und dem Abspielen von Musikstücken von der jeweiligen Musikbox 20.

Das Aufspielen von neuen Musikdaten auf den Musikserver 11 erfolgt seitens der CD-Abspieleinheit 40 über die LAN/WAN-Leitung 4a auf die Musikdatenbank 13. Die Musikdaten werden im MPEG-1-Layer-3-Format übertragen, so daß pro Minute Spielzeit ungefähr 1 Megabyte Speicherplatz anfällt. Für die einzelnen Musikstücke wird in der Benutzerdatenbank 14 jeweils die Lizenzierung gegenüber der Betreibergesellschaft einer Betreibergruppe 22 überwacht. Ein Musikstück kann beispielsweise für ein Jahr lizensiert werden, so daß nach dem Jahr neue Lizenzgebühren anfallen, soweit das Musikstück weiterhin von der Betreibergesellschaft angefordert wird.

Das Aufspielen neuer Musikstücke auf jeweils eine Musikbox 20 erfolgt auf Veranlassung durch die Betreibergesellschaft in der jeweiligen Management-Station 30. Ein Einloggen seitens der Management-Station 30 auf den Datenserver 10 erfolgt in einem ersten Schritt über die ISDN-Leitung 2b gegenüber dem Informations-Server 12. Nach dem Login überträgt der Informations-Server 12 zum Aktualisieren der Servicedatenbank 32 zwei Befehlsgruppen, nämlich einen "Hinzufüge-Befehl" und einen "Lösch-Befehl". Der Hinzufüge-Befehl umfaßt eine Liste sämtlicher Musiktitel, die nach dem letzten Login seitens der CD-Abspieleinheit 40 neu aufgespielt wurden. Dagegen enthält der Lösch-Befehl eine Liste über die seit dem letzten Login auf der Musikdatenbank 13 gelöschten Musiktitel. Nach dem Login stellt somit die Service-Datenbank 32 ein Spiegelbild der auf dem Informations-Server 12 vorhandenen Daten über die Musikdatenbank 13 dar.

Nachdem die Aktualisierung der Servicedatenbank 32 abgeschlossen ist, können vom Betreiber neue Musiktitel aus dem Datenangebot ausgewählt werden, die auf eine bestimmte Musikbox 20 der Betreibergruppe 22 neu aufgespielt werden sollen. Nach Auswahl der Titel wird ein entsprechender Befehl über die ISDN-Leitung 2c an den Hauptserver 11 abgesetzt. Weitere Schritte sind auf der Management-Station 30 nicht erforderlich, so daß die Management-Station 30 nach Absetzen des jeweiligen Befehls grundsätzlich wieder vom Netz abgeschaltet werden kann. Der von der jeweiligen Management-Station 30 empfangene Befehl wird seitens des Hauptservers in eine Liste der abzuarbeitenden Befehle eingereiht und zu gegebener Zeit abgearbeitet. Hierzu stellt der Hauptserver 11 eine Datenverbindung über die ISDN-Leitung 1 mit der betreffenden Musikbox 20 her und überspielt die ausgewählten Musiktitel von der Musikdatenbank 13 in die lokale Datenbank 21 der Musikbox 20. Nachdem alle Musiktitel vollständig überspielt sind, wird das erfolgreiche Abarbeiten des Befehls an die betreffende Management-Station 30 über die Internet-Verbindung 2d bestätigt. Die Bestätigungsnachricht wird dabei als e-Mail abgesetzt und kann zu gegebener Zeit von der Management-Station 30 abgerufen werden.

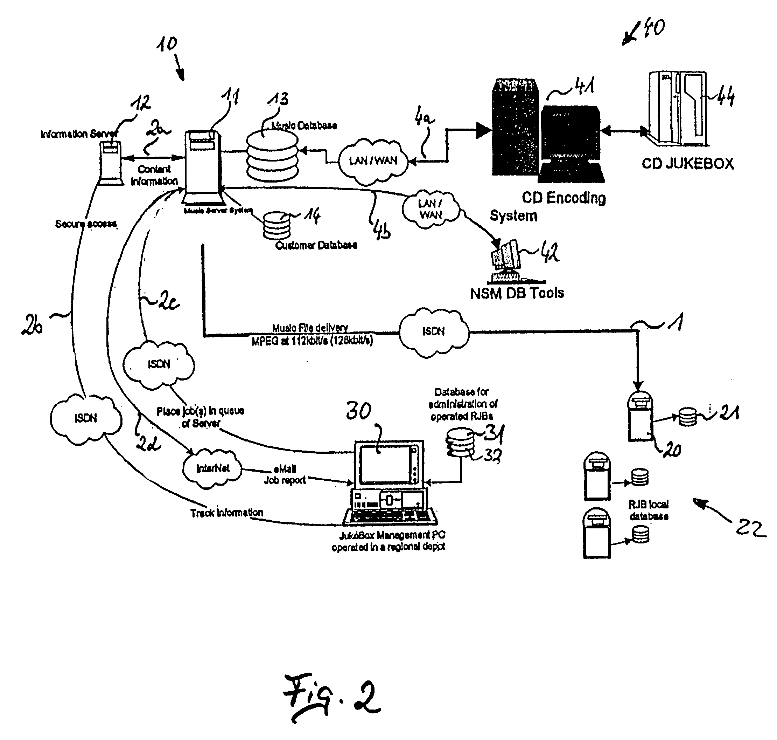

Fig. 2 zeigt das erfindungsgemäße Multimediabox-Netzwerk im Betrieb nach einer zweiten Ausführungsform.

Das Multimediabox-Netzwerk nach Fig. 2 unterscheidet sich gegenüber dem Netzwerk nach Fig. 1 dadurch, daß die dritte Datenverbindung zwischen der jeweiligen Musikbox (20) und der Management-Station (30) nicht durch eine direkte ISDN-Verbindung (3), sondern aus einer über den Datenserver geleiteten ISDN-Verbindung besteht. Hierbei werden die bereits bestehenden Datenverbindungen 2b, bzw. 2c sowie 2a und 1 derart hintereinander geschaltet, daß eine Datenverbindung zwischen der jeweiligen Musikbox und der Management-Station herstellbar ist.

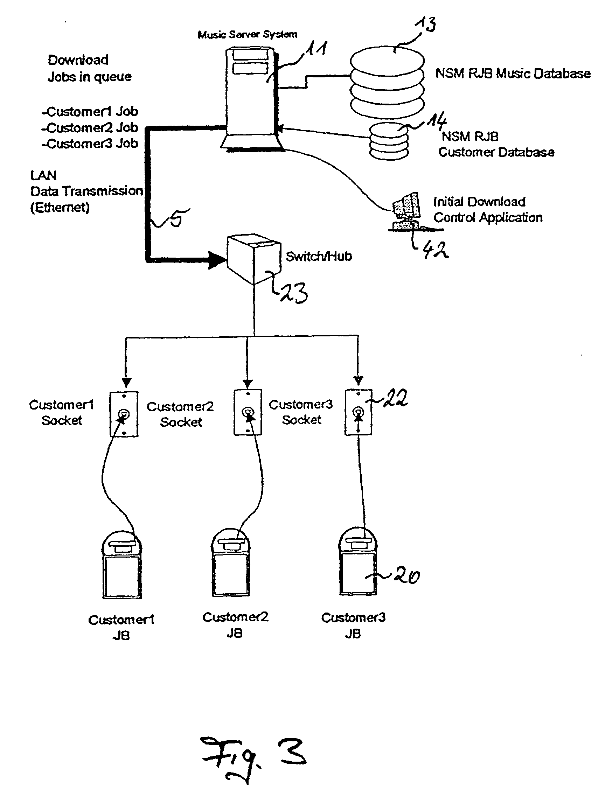

Fig. 3 zeigt die Initialisierung einzelner Musikboxen vor deren Inbetriebnahme.

Eine Musikbox 20 wird in der Regel mit einer leeren lokalen Datenbank 21 angeliefert, so daß vor deren Inbetriebnahme die betreffende Musikbox initialisiert werden muß.

Zum einen kann die Initialisierung einer Musikbox nach deren Installation vor Ort erfolgen, so daß dann gemäß Fig. 1 über die ISDN-Leitung 1 entsprechende Musikdaten mit einem auf dem Hauptserver 11 verfügbaren Initialisierungsprogramm überspielt werden. Ein Nachteil dieser Initialisierung besteht allerdings darin, daß verhältnismäßig hohe Übertragungskosten über die ISDN-Leitung anfallen, da bei der Erstbespielung der lokalen Datenbank 21 große Datenmengen übertragen werden müssen.

Eine andere Möglichkeit der Initialisierung besteht daher in der Konfiguration gemäß Fig. 2, wonach die zu initialisierenden Musikboxen 20 sich in der Nähe des Hauptservers 11 befinden, so daß über eine lokale Netzwerkverbindung 5 die entsprechenden Daten überspielt werden können. Auf diese Weise können Datenverbindungen mit einer Übertragungsrate von einigen Megabits pro Sekunde bereitgestellt werden, während über die herkömmliche ISDN-Leitung zwischen dem Hauptserver 11 und einer Musikbox 20 gemäß Fig. 1 nur Übertragungsraten von 128 kBit pro Sekunde erreicht werden können. Nachdem die Musikboxen 20 entsprechend initialisiert sind, können diese an den jeweiligen Betreiber ausgeliefert werden, wobei der Betreiber an dem Aufstellungsort die Musikbox lediglich mit einer herkömmlichen ISDN-Telefonbuchse zu verbinden hat.

## Patentansprüche

1. Multimediabox-Netzwerk, bestehend
aus einem Datenserver (10), der einen Massenspeicher (13) umfaßt, auf dem digitale Musikstücke und/oder Videos gespeichert sind, und
aus mehreren Multimediaboxen (20), wobei eine Multimediabox jeweils eine Bedieneinheit, einen lokalen Speicher und eine Abspieleinheit umfaßt und wobei jede Multimediabox über eine erste Datenverbindung (1) mit dem Datenserver (10) verbunden ist, die von einer direkten Datenfernübertragungsleitung gebildet wird,
**dadurch gekennzeichnet,**
**daß** mindestens eine einen Computer umfassende Management-Station (30) über eine zweite Datenverbindung (2a, 2b) mit dem Datenserver (10) und über eine dritte Datenverbindung (3) mit mindestens einer Multimediabox (20) verbunden ist,
wobei über die erste Datenverbindung (1) Musikstücke und/oder Videos vom Datenserver (10) zur Musikbox (20) übertragbar sind,
wobei über die zweite Datenverbindung (2a, 2b) Informationen über die auf dem Datenserver (10) verfügbaren Musikstücke und/oder Videos auf die Management-Station (30) übertragbar sind und
wobei über die dritte Datenverbindung Daten zur Wartung und/oder Programmierung der jeweiligen Multimediabox (20) von der daran angeschlossenen Management-Station (30) übertragbar sind.

2. Multimediabox-Netzwerk nach Anspruch 1, **dadurch gekennzeichnet, daß** die dritte Datenverbindung aus einer direkten ISDN-Leitung (3) zwischen der jeweiligen Multimedia-Box (20) und der Management-Station (30) besteht.

3. Multimediabox-Netzwerk nach Anspruch 1, **dadurch gekennzeichnet, daß** die dritte Datenverbindung aus der Hintereinanderschaltung der ersten Datenverbindung (1) und der zweiten Datenverbindung (2a, 2b) besteht.

4. Multimediabox-Netzwerk nach einem der Ansprüche 1-3, **dadurch gekennzeichnet, daß** die die erste Datenverbindung (1) bildende direkte Datenfernübertragungsleitung aus einer ISDN-Leitung besteht.

5. Multimediabox-Netzwerk nach einem der Ansprüche 1 bis 4, **dadurch gekennzeichnet, daß** auf der Management-Station (30) eine Servicedatenbank der auf dem Datenserver verfügbaren Musikstücke und/oder Videos abgespeichert ist, die über die zweite Datenverbindung (2a, 2b) aktualisierbar ist.

6. Multimediabox-Netzwerk nach einem der Ansprüche 1 bis 5, **dadurch gekennzeichnet, daß** die Aktualisierung der auf der mindestens einen Management-Station (30) befindlichen Servicedatenbank über die zweite Datenverbindung (2a, 2b) aufgrund von einem Hinzufüge-Befehl und einem Lösch-Befehl erfolgt.

7. Multimediabox-Netzwerk nach einem der Ansprüche 1 bis 6, **dadurch gekennzeichnet, daß** der Datenserver aus einem Hauptserver (11) und einem Informations-Server (12) besteht.

8. Multimediabox-Netzwerk nach Anspruch 7, **dadurch gekennzeichnet, daß** auf dem Informations-Server (12) sämtliche Informationen über das Datenangebot des Hauptservers (11) in einer Informations-Datenbank abgespeichert sind, wobei der Datenaustausch zwischen dem Hauptserver und dem Informations-Server über eine parallele Datenverbindung (2a) erfolgt.

9. Multimediabox-Netzwerk nach einem der Ansprüche 1 bis 8, **dadurch gekennzeichnet, daß** die zweite Datenverbindung (2a, 2b) aus einer ISDN-Leitung besteht.

10. Multimediabox-Netzwerk nach einem der Ansprüche 1 bis 9, **dadurch gekennzeichnet, daß** ein Befehl zum Überspielen von Musikstücken und/oder Videos auf eine bestimmte Multimediabox (20) seitens der damit verbundenen Management-Station (30) an den Datenserver über die zweite Datenverbindung (2a, 2b) und/oder über eine Zusatzdatenverbindung (2c, 2d) absetzbar ist, wobei das Überspielen von Musikstücken und/oder Videos auf die bestimmte Multimediabox über die erste Datenverbindung (1) erfolgt.

11. Multimediabox-Netzwerk nach Anspruch 10, **dadurch gekennzeichnet, daß** die Zusatzdatenverbindung (2c, 2d) zu der zweiten Datenverbindung (2a, 2b) in Richtung zum Datenserver aus einer ISDN-Leitung und in Richtung zur Management-Station (30) aus einer Internet-Verbindung besteht.

12. Multimediabox-Netzwerk nach einem der Ansprüche 1 bis 11, **dadurch gekennzeichnet, daß** auf der Management-Station (30) eine Benutzerdatenbank (31) der Benutzerdaten abgespeichert ist, aufgrund dessen über die dritte Datenverbindung (3) eine Wartung und/oder eine Programmierung der jeweils verbundenen Multimediabox (20) möglich ist.

13. Multimediabox-Netzwerk nach Anspruch 12, **dadurch gekennzeichnet, daß** auf der Benutzerdatenbank (31) der Status der an die jeweilige Management-Station angeschlossenen Multimediaboxen (20) abgespeichert ist.

14. Multimediabox nach einem der Ansprüche 1 bis 13, **dadurch gekennzeichnet, daß** der Massenspeicher (13) von einer CD-Abspieleinheit (40) mit digitalen Musikstücken und/oder Videos bespielt wird.

15. Multimediabox-Netzwerk nach Anspruch 13, **dadurch gekennzeichnet, daß** Musikstücke im MPEG-Format und Cover-Bilder im IPEG-Format auf den Massenspeicher (13) überspielt werden.

16. Multimediabox-Netzwerk nach einem der Ansprüche 1 bis 15, **dadurch gekennzeichnet, daß** die Bedieneinheit einer Multimediabox (20) aus einem Touch-Screen-Monitor besteht, auf dem die in dem lokalen Speicher (21) abgespeicherten digitalen Musikstücke und/oder Videos anzeigbar und über Fingerdruck auswählbar sind und einer Abspieleinheit zuführbar sind.

17. Multimediabox-Netzwerk nach Anspruch 16, **dadurch gekennzeichnet, daß** die Abspieleinheit aus einer Verstärker-Lautsprecher-Einheit und/oder einem Video-Monitor besteht.

## Claims

1. Multimedia-box network, comprising
a data server (10) which comprises a bulk memory (13) storing digital pieces of music and/or videos, and
a plurality of multimedia boxes (20), where a multimedia box respectively comprises a control unit, a local memory and a playback unit and where each multimedia box is connected to the data server (10) via a first data link (1) which is formed by a direct data communication line,
**characterized**
**in that** at least one management station (30), which comprises a computer, is connected to the data server (10) via a second data link (2a, 2b) and to at least one multimedia box (20) via a third data link (3),
with the first data link (1) being able to be used to transmit pieces of music and/or videos from the data server (10) to the jukebox (20),
with the second data link (2a, 2b) being able to be used to transmit information about the pieces of music and/or videos available on the data server (10) to the management station (30), and
with the third data link being able to be used to transmit data for maintaining and/or programming the respective multimedia box (20) from the management station (30) connected thereto.

2. Multimedia-box network according to Claim 1, **characterized in that** the third data link comprises a direct ISDN line (3) between the respective multimedia box (20) and the management station (30).

3. Multimedia-box network according to Claim 1, **characterized in that** the third data link comprises the first data link (1) and the second data link (2a, 2b) connected in series.

4. Multimedia-box network according to one of Claims 1-3, **characterized in that** the direct data communication line forming the first data link (1) comprises an ISDN line.

5. Multimedia-box network according to one of Claims 1 to 4, **characterized in that** the management station (30) stores a service database for the pieces of music and/or videos available on the data server, which service database can be updated via the second data link (2a, 2b).

6. Multimedia-box network according to one of Claims 1 to 5, **characterized in that** the service database held on the at least one management station (30) is updated via the second data link (2a, 2b) on the basis of an add command and an erase command.

7. Multimedia-box network according to one of Claims 1 to 6, **characterized in that** the data server comprises a main server (11) and an information server (12).

8. Multimedia-box network according to Claim 7, **characterized in that** the information server (12) stores all the information about the data provided by the main server (11) in an information database, with the data interchange between the main server and the information server being effected using a parallel data link (2a).

9. Multimedia-box network according to one of Claims 1 to 8, **characterized in that** the second data link (2a, 2b) comprises an ISDN line.

10. Multimedia-box network according to one of Claims 1 to 9, **characterized in that** a command for transferring pieces of music and/or videos to a particular multimedia box (20) can be sent by the management station (30) connected thereto to the data server via the second data link (2a, 2b) and/or via a supplementary data link (2c, 2d), with pieces of music and/or videos being transferred to the particular multimedia box via the first data link (1).

11. Multimedia-box network according to Claim 10, **characterized in that** the supplementary data link (2c, 2d) for the second data link (2a, 2b) comprises an ISDN line in the direction of the data server and comprises an Internet connection in the direction of the management station (30).

12. Multimedia-box network according to one of Claims 1 to 11, **characterized in that** the management station (30) stores a user database (31) for the user data, and on the basis of this the third data link (3) can be used to maintain and/or to program the respective connected multimedia box (20).

13. Multimedia-box network according to Claim 12, **characterized in that** the user database (31) stores the status of the multimedia boxes (20) connected to the respective management station.

14. Multimedia box [sic] according to one of Claims 1 to 13, **characterized in that** the bulk memory (13) has digital pieces of music and/or videos recorded on it by a CD playback unit (40).

15. Multimedia-box network according to Claim 13, **characterized in that** pieces of music in MPEG format and cover pictures in IPEG [sic] format are transferred to the bulk memory (13).

16. Multimedia-box network according to one of Claims 1 to 15, **characterized in that** the control unit for a multimedia box (20) comprises a touch screen monitor on which the digital pieces of music and/or videos stored in the local memory (21) can be displayed and selected by means of finger pressure and supplied to a playback unit.

17. Multimedia-box network according to Claim 16, **characterized in that** the playback unit comprises an amplifier/loudspeaker unit and/or a video monitor.

## Revendications

1. Réseau pour des appareils multimédia, composé
d'un serveur de données (10) comprenant une mémoire de masse (13) dans laquelle sont enregistrés des morceaux de musique et/ou des vidéos numériques, et
de plusieurs appareils multimédia (20), chaque appareil multimédia comprenant une unité de commande, une mémoire locale et une unité de diffusion et chaque appareil multimédia étant relié au serveur de données (10) par l'intermédiaire d'une première ligne de données (1) formée par une ligne directe de télétransmission de données,
**caractérisé en ce que**
au moins une station de gestion (30) comprenant un ordinateur est reliée au serveur de données (10) par l'intermédiaire d'une deuxième ligne de données (2a, 2b) et à au moins un appareil multimédia (20) par l'intermédiaire d'une troisième deuxième ligne de données (3),
des morceaux de musique et/ou des vidéos pouvant être transmis du serveur de données (10) à l'appareil multimédia (20) par l'intermédiaire de la première ligne de données (1),
des informations sur les morceaux de musique et/ou les vidéos disponibles sur le serveur de données (10) pouvant être transmis à la station de gestion (30) par l'intermédiaire de la deuxième ligne de données (2a, 2b),
des données pour la maintenance et/ou la programmation de chaque appareil multimédia (20) par la station de gestion (30) qui y est raccordée pouvant être transmis par l'intermédiaire de la troisième ligne de données.

2. Réseau pour des appareils multimédia selon la revendication 1, **caractérisé en ce que** la troisième ligne de données consiste en une ligne RNIS (3) directe entre chaque appareil multimédia (20) et la station de gestion (30).

3. Réseau pour des appareils multimédia selon la revendication 1, **caractérisé en ce que** la troisième ligne de données consiste dans le branchement en série de la première ligne de données (1) et de la deuxième ligne de données (2a, 2b).

4. Réseau pour des appareils multimédia selon l'une des revendications 1 à 3, **caractérisé en ce que** la ligne directe de télétransmission de données constituant la première ligne de données (1) consiste en une ligne RNIS.

5. Réseau pour des appareils multimédia selon l'une des revendications 1 à 4, **caractérisé en ce qu'**une base de données de service des morceaux de musique et/ou des vidéos disponibles sur le serveur de données, pouvant être actualisée par l'intermédiaire de la deuxième ligne de données (2a, 2b), est mémorisée dans la station de gestion (30).

6. Réseau pour des appareils multimédia selon l'une des revendications 1 à 5, **caractérisé en ce que** l'actualisation de la base de données de service se trouvant sur au moins une station de gestion (30) s'effectue par l'intermédiaire de la deuxième ligne de données (2a, 2b) à l'aide d'une instruction d'ajout et d'une instruction d'effacement.

7. Réseau pour des appareils multimédia selon l'une des revendications 1 à 6, **caractérisé en ce que** le serveur de données se compose d'un serveur principal (11) et d'un serveur d'information (12).

8. Réseau pour des appareils multimédia selon la revendication 7, **caractérisé en ce que** toutes les informations sur l'offre de données du serveur principal (11) sont mémorisées sur le serveur d'information (12), dans une base de données d'information, l'échange de données entre le serveur principal et le serveur d'information se faisant par l'intermédiaire d'une ligne de données parallèle (2a).

9. Réseau pour des appareils multimédia selon l'une des revendications 1 à 8, **caractérisé en ce que** la deuxième ligne de données (2a, 2b) consiste en une ligne RNIS.

10. Réseau pour des appareils multimédia selon l'une des revendications 1 à 9, **caractérisé en ce qu'**une instruction de transfert de morceaux de musique et/ou de vidéos sur un appareil multimédia (20) déterminé peut être transmise du côté de la station de gestion (30) reliée à celui-ci au serveur de données par l'intermédiaire de la deuxième ligne de données (2a, 2b) et/ou d'une ligne de données supplémentaire (2c, 2d), le transfert de morceaux de musique et/ou de vidéos sur l'appareil multimédia déterminé s'effectuant par l'intermédiaire de la première ligne de données (1).

11. Réseau pour des appareils multimédia selon la revendication 10, **caractérisé en ce que** la ligne de données supplémentaire (2c, 2d) pour la deuxième ligne de données (2a, 2b) consiste en une ligne RNIS en direction du serveur de données et en une connexion Internet en direction de la station de gestion (30).

12. Réseau pour des appareils multimédia selon l'une des revendications 1 à 11, **caractérisé en ce qu'**une base de données utilisateur (31) pour les données utilisateur est mémorisée sur la station de gestion (30), grâce à laquelle une maintenance et/ou une programmation de l'appareil multimédia (20) connecté dans chaque cas sont possibles par l'intermédiaire de la troisième ligne de données (3).

13. Réseau pour des appareils multimédia selon la revendication 12, **caractérisé en ce que** l'état des appareils multimédia (20) connectés à chaque station de gestion est mémorisé dans la base de données utilisateur (31) de celle-ci.

14. Réseau pour des appareils multimédia selon l'une des revendications 1 à 13, **caractérisé en ce que** la mémoire de masse (13) est alimentée en morceaux de musique et/ou en vidéos numériques à partir d'une unité de lecture de CD (40).

15. Réseau pour des appareils multimédia selon la revendication 13, **caractérisé en ce que** des morceaux de musique au format MPEG et des images au format IPEG sont chargés dans la mémoire de masse (13).

16. Réseau pour des appareils multimédia selon l'une des revendications 1 à 15, **caractérisé en ce que** l'unité de commande d'un appareil multimédia (20) se compose d'un écran tactile, sur lequel les morceaux de musique et/ou les vidéos numériques mémorisés dans la mémoire locale (21) peuvent être affichés et sélectionnés par pression du doigt, puis transférés à une unité de diffusion.

17. Réseau pour des appareils multimédia selon la revendication 16, **caractérisé en ce que** l'unité de diffusion se compose d'une unité amplificateur/haut-parleur et/ou d'un écran vidéo.
